# EUROPÄISCHE PATENTSCHRIFT

(11) **EP 2 860 598 B1**
(45) Veröffentlichungstag und Bekanntmachung des Hinweises auf die Patenterteilung: **21.03.2018**
(21) Anmeldenummer: 13188435.5
(22) Anmeldetag: 14.10.2013
(51) Int. Cl.: G05B 19/05, G05B 9/03, G05B 19/042

(54) **Verfahren zum Betreiben eines redundanten Automatisierungssystems, wobei der Slave Diagnosefunktionen durchführt**
Method for operating a redundant automation system, wherein the Slave is processing diagnostic functions
Procédé d'operation d' un système d'automatisation redondant, dans lequel l' esclave exécute de fonctions diagnostiques

(43) Veröffentlichungstag der Anmeldung: 15.04.2015
(73) Patentinhaber: Siemens Aktiengesellschaft, 80333 München (DE)
(72) Erfinder: Grosch, Thomas, 90574 Roßtal (DE); Laforsch, Jürgen, 77815 Bühl (DE); Renschler, Albert, 76275 Ettlingen (DE)

(56) Entgegenhaltungen:
- EP-A2- 1 136 896
- EP-A2- 1 388 397
- EP-B1- 1 086 408
- DE-A1- 10 233 873
- US-A1- 2002 095 221

## Beschreibung

Die Erfindung betrifft ein Verfahren zum Betreiben eines mit einem ersten und einem zweiten Teilsystem versehenen Automatisierungssystems, welche zur Steuerung eines technischen Prozesses jeweils ein Steuerprogramm verarbeiten, wobei eines dieser Teilsysteme als Master und das andere Teilsystem als Slave arbeitet. Darüber hinaus betrifft die Erfindung ein Automatisierungssystem, welches zur Durchführung des Verfahrens geeignet ist.

Im Automatisierungsumfeld werden verstärkt hochverfügbare Lösungen (H-Systeme) gefordert, welche geeignet sind, eventuell auftretende Stillstandszeiten der Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über die Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Häufig wird von einem H-System ein stoßfreies "Failover" gefordert, falls eines der Teilsysteme ausfällt und auf das andere Teilsystem umgeschaltet werden muss. Dies bedeutet, dass trotz dieser ungeplanten Umschaltung bzw. diesem ungeplanten Wechsel von einem auf das andere Teilsystem diese Umschaltung bzw. dieser Wechsel sich nicht störend auf den zu steuernden technischen Prozess auswirkt. Dabei ist zulässig, dass an den Ausgängen der angeschlossenen Peripherie eine (kurze) Totzeit auftreten darf, während der die Ausgänge auf ihren zuletzt gültigen Prozessausgangswerten verharren. Ein Sprung (Stoß) der Werte an diesen Ausgängen aufgrund der Umschaltung ist jedoch nicht erwünscht und sollte daher vermieden werden. Unter stoßfrei ist daher auch die Stetigkeit des Kurvenverlaufs der Prozessausgangswerte zu verstehen.
Um dies zu erreichen, müssen die beiden Teilsysteme zum Zeitpunkt des Ausfalls den gleichen Systemzustand aufweisen. Dies wird durch das geeignete Synchronisationsverfahren sichergestellt. Verarbeiten beide Teilsysteme die Eingangsinformationen (Eingaben) des Prozesses, so befinden sich beide Systeme dann im gleichen Systemzustand, wenn sie - bei gleichen Prozesseingangsdaten bzw. Prozesseingangsinformationen - ihre jeweiligen "thread-globalen" Daten (gemeinsame Daten von Programmen, insbesondere von Programmen unterschiedlicher Prioritäten) in gleicher Weise verändern. Um dies zu erreichen, stellt das Synchronisationsverfahren sicher, dass die einzelnen Threads der beiden Teilsysteme in gleicher Art und Weise unterbrochen bzw. abgearbeitet werden. Damit ergibt sich ein identisches "Threadgebirge".

Aus dem Siemens-Katalog ST 70, Kapitel 6, Ausgabe 2011 ist ein redundantes, aus zwei Teilsystemen bestehendes Automatisierungssystem (H-System) bekannt, welches dazu vorgesehen ist, die Verfügbarkeit einer zu steuernden Anlage zu erhöhen. Dazu ist das Automatisierungssystem mit Mitteln versehen, welche aufgrund eines Ereignisses zunächst entscheiden, welches Programm gestartet werden muss, um geeignet auf das Ereignis zu reagieren. Für den Fall, dass beispielsweise während der Ausführung eines Programms ein Ereignis in Form eines anstehenden Alarms des zu steuernden technischen Prozesses an einem Meldeeingang des Automatisierungssystems anliegt, wird gewöhnlich das laufende Programm an einem Wartepunkt angehalten und ein Programm gestartet, das zur Analyse des Alarms und zum Einleiten von Maßnahmen vorgesehen ist, welche die Ursache des Alarms beheben. Dieses Automatisierungssystem wird regelmäßig synchronisiert und es ist sichergestellt, dass der Ausfall eines dieser Teilsysteme sich nicht störend auf einen zu steuernden Prozess auswirkt, weil das andere Teilsystem die Ausführung bzw. die Bearbeitung des entsprechenden Teils ihres jeweiligen Steuerprogramms oder die Ausführung bzw. die Bearbeitung der entsprechenden Teile dieses Steuerprogramms fortsetzen kann.
Für den Fall, dass z. B. ein auf einem ersten Teilsystem aufgetretenes Ereignis nicht mit einem zweiten Teilsystem eines zwei Teilsysteme umfassenden Automatisierungssystems synchronisiert wird und nach der Bearbeitung des Ereignisses durch das erste Teilsystem dieses Teilsystem ausfällt, kann der Verlauf eines zu steuernden technischen Prozesses gestört werden; denn das zweite Teilsystem durchläuft - ohne Kenntnis des Ereignisses - einen anderen, die Ausführungs-Reihenfolge der Programme repräsentierenden Programmpfad als den, welchen das zweite Teilsystem in Kenntnis des Ereignisses durchlaufen würde und der auch erforderlich wäre, um den genannten Verlauf des zu steuernden technischen Prozesses nicht zu stören.

In diesem Zusammenhang wird darauf hingewiesen, dass unter einem Programm sowohl ein Programm als solches, als auch ein Unterprogramm, ein Teil eines Programms, eine Task, ein Thread, ein Organisationsbaustein, ein Funktionsbaustein oder ein sonstiger geeigneter Programmcode zur Verwirklichung einer Automatisierungsfunktion verstanden wird, wobei die Programme eines Automatisierungssystems gewöhnlich in Prioritätsklassen eingeteilt sind und gemäß ihrer zugeordneten Priorität bearbeitet bzw. ausgeführt werden.

Ein derartiges redundantes Automatisierungs- bzw. H-System ist gewöhnlich über Jahre hinweg im Einsatz. Während dieses langen Zeitraums kann es vorkommen, dass die Anlage z. B. um zusätzliche Sensoren und/oder das jeweilige Steuerprogramm der Teilsysteme erweitert und/oder optimiert wird, wobei für einen Anwender zum Testen der geänderten Steuerprogramme bzw. von geänderten Programmteilen folgende Testmöglichkeiten vorgesehen sind:
A) Der Anwender kann im Rahmen der Inbetriebnahme einen oder mehrere Haltepunkte im jeweiligen Steuerprogramm setzen. Während dieser Inbetriebnahme - was aus Prozesssicht eine unkritische Phase darstellt - arbeitet das Automatisierungs- bzw. H-System noch im Solo-Betrieb und die so genannte HaltepunktFunktion kann genutzt werden. Nach Erreichen eines Haltepunktes kann sich der Anwender mittels eines Engineering Systems nacheinander Diagnosedaten, z. B. beliebige Variablen des jeweiligen Teilsystems (PLC) ansehen. Welche Variable konkret als nächstes zu prüfen ist, ergibt sich z. B. aus den Werten der aktuell begutachteten Variablen. Nach der Inbetriebnahme, d. h. während der Prozessteuerung, muss allerdings auf derartige Haltepunkte verzichtet werden, weil bei einem derartig bekannten Automatisierungssystem sonst ein kontinuierlicher Betrieb nicht mehr bewerkstelligt werden kann und daher der "Philosophie" eines redundanten Automatisierungssystems widersprochen würde. Ein derartiger kontinuierlicher Betrieb ist nämlich für ein redundantes Automatisierungssystem eine elementare Betriebsart und daher unabdingbar.
B) Nach der Inbetriebnahme, d. h. im Rahmen des redundant laufenden Automatisierungssystems zur Steuerung des technischen Prozesses (Prozesssteuerung), stehen dem Anwender nur noch solche Funktionen zur Verfügung, welche die Verarbeitung des Steuerungsprogramms nur für kurze Zeit beeinflussen. Gewöhnlich wird eine vorab bereitgestellte Liste von Variablen nach der Verarbeitung des jeweiligen Steuerprogramms ausgelesen, dem Engineering-System übermittelt und unmittelbar danach die Verarbeitung des jeweiligen Steuerprogramms im Rahmen eines weiteren Verarbeitungszyklus fortgesetzt.

US 2002/0095221 A1 beschreibt ein redundantes Automatisierungssystem, welches mit einer ersten und einer zweiten Steuerung versehen ist. Es sind geeignete Maßnahmen vorgesehen, die eine zeitgerechte Ausführung von periodischen Tasks ermöglichen.

Aus der DE 102 33 873 A1 ist eine Krananlage mit einer ersten und einer zweiten speicherprogrammierbaren Steuerung bekannt, welche den Steuerungsbetrieb der ersten speicherprogrammierbaren Steuerung überwacht.

EP 1 086 408 B1 offenbart eine Steuereinrichtung einer Anlage mit einer ersten und einer zweiten Steuereinheit, welche zur Überwachung der ersten Steuereinheit vorgesehen ist.

Der Erfindung liegt daher die Aufgabe zugrunde, ein Verfahren der eingangs genannten Art anzugeben, mittels welchem die Bereitstellung von Diagnose- und/oder Testdaten für Diagnose- und/oder Testmaßnahmen während des Steuerbetriebs ermöglicht wird, wobei auf eine Haltepunktfunktion nicht verzichtet werden muss. Darüber hinaus ist ein Automatisierungssystem zu schaffen, welches zur Durchführung des Verfahrens geeignet ist.

Diese Aufgabe wird im Hinblick auf das Verfahren durch die im kennzeichnenden Teil des Anspruchs 1 angegebenen, bezüglich des Automatisierungssystems durch die im kennzeichnenden Teil des Anspruchs 4 angegebenen Maßnahmen gelöst.

Vorteilhaft ist, dass der Master im Hinblick auf die Bereitstellung der Diagnose- und/oder Testdaten (Diagnose- und/oder Testinformationen) - im Folgenden als Diagnosedaten bezeichnet - und für deren Übermittlung an das Engineering-System nicht belastet wird. Ein Anwender kann mehrere Diagnose- und/oder Testanweisungen im Slave-Steuerprogramm vorgeben, wobei diese Anweisungen für den Master unbedeutend sind. Nur der Slave verarbeitet diese Anweisungen und übermittelt alle Diagnosedaten dem angeschlossenen Engineering-System.

Aufgrund der Verarbeitung der Diagnosedaten mittels des Slaves vergrößert sich der zeitliche Nachlauf, welcher die zeitliche Differenz (Abstand) repräsentiert zwischen dem Beginn der Verarbeitung der Master-Verarbeitungsabschnitte und dem Beginn der Verarbeitung der freigegebenen Slave-Verarbeitungsabschnitte. Während der Verarbeitung der Diagnosedaten sammeln sich die Master-Freigaben im Slave an, bleiben aber zunächst unberücksichtigt. Erst nachdem der Slave alle Diagnosedaten an das Engineering-System übermittelt hat, setzt der Slave seine Programmbearbeitung anhand der aufgelaufenen Freigaben fort und verarbeitet die freigegebenen Verarbeitungsabschnitte seines Slave-Steuerprogramms.

Ist der Aufholvorgang soweit fortgeschritten, dass der zeitliche Abstand (Nachlauf) zwischen dem Master und dem Slave wieder das "normale" Maß (einen vorgegebenen Wert) erreicht hat, bietet das Automatisierungssystem wieder die volle Redundanz- bzw. Umschaltqualität.

Der Anwender kann sich am Engineering-System im Hinblick auf die Interpretation der Diagnosedaten beliebig viel Zeit lassen und quasi zwischen den einzelnen Datenbereichen des Automatisierungssystems "hin- und herspringen" (beliebige Variablen beliebiger Datenbausteine, Aufruf-Hierarchie, etc.).

Unter Diagnosedaten werden alle Daten verstanden, welche zur Diagnose und/oder zum Testen des Steuerprogramms - des Master-Steuerprogramms bzw. des dem Master-Steuerprogramm entsprechenden Slave-Steuerprogramms - erforderlich sind. Derartige Daten sind beispielsweise Systemdaten, Variablen und deren Werte, Anwenderdaten und/oder Prozesseingangsdaten sowie Prozessausgangsdaten.

Um während der Prozesssteuerung (während des Steuerbetriebs) Diagnosedaten für geeignete Diagnose- und/oder Testmaßnahmen bereitstellen zu können, durchlaufen sowohl der Master als auch der Slave die Programmpfade zeitlich asynchron. Dies bedeutet, dass der Master im Hinblick auf die Programmver- bzw. -bearbeitung dem Slave zeitlich vorausläuft bzw. der Slave dem Master nachläuft. Unter einem "Nachlauf" bzw. "Vorauslauf" wird - wie erläutert - die zeitliche Differenz zwischen dem Beginn der Verarbeitung der Verarbeitungsabschnitte mittels des Masters und dem Beginn der Verarbeitung der Verarbeitungsabschnitte mittels des Slaves verstanden, was dem Zeitpunkt des Auftretens der jeweiligen Freigabe entspricht.

In einer Ausgestaltung der Erfindung ist das Automatisierungssystem mit einer Master- und einer Slave-CPU versehen, wobei für den Fall, dass der Master ausfällt, der Slave die Funktion des Masters übernimmt. Dadurch wird ein redundantes Automatisierungssystem verwirklicht, wobei über die Redundanzfunktionalität hinaus während des Steuerbetriebs bzw. während der Prozesssteuerung der Slave die Diagnosedaten dem Engineering-System bereitstellt.

In einer weiteren Ausgestaltung der Erfindung sind der Master und der Slave Bestandteile einer Multicore-CPU, wobei ein erster Core der Multicore-CPU als Master und ein zweiter Core der Multicore-CPU als Slave ausgebildet ist. In diesem Fall ist der Slave nur für die Bereitstellung der Diagnosedaten vorgesehen, wobei die Multicore-CPU in einem Solobetrieb bzw. in einem nicht-redundanten Betrieb arbeitet. Selbstverständlich können zwei derartige Multi-Core-CPUs Bestandteile eines redundanten Automatisierungssystems sein.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figuren 1 und 2: Abläufe einer zeitlich asynchronen Kopplung von zwei Teilsystemen und
- Figur 3: ein redundantes Automatisierungssystem.

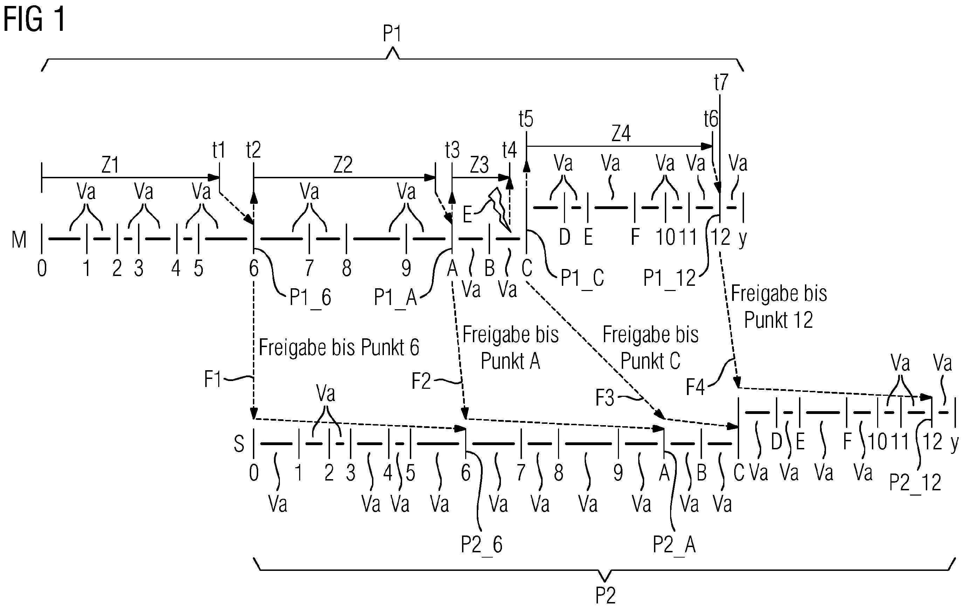

Die in den Figuren 1 bis 3 gleichen Teile sind mit gleichen Bezugszeichen versehen.

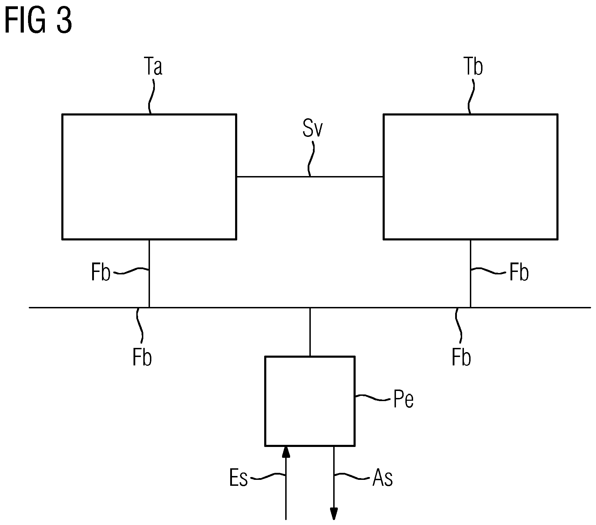

Es wird zunächst auf Figur 3 verwiesen, in welcher ein an sich bekanntes, redundantes, zwei Teilsysteme umfassendes Automatisierungssystem dargestellt ist. Ein erstes Teilsystem Ta und ein zweites Teilsystem Tb sind über einen Feldbus Fb mit einer Peripherieeinheit Pe verbunden. Dabei genügt der Feldbus Fb beispielsweise der PROFIBUS-DP-Spezifikation. Prinzipiell sind auch andere Bussysteme, z. B. Ethernet, Fieldbus, Modbus oder aber auch parallele Bussysteme geeignet. Die Peripherieeinheit Pe erhält über Eingangsleitungen Es Signale von Messumformern oder Messwertgebern, die zur Erfassung eines Prozesszustands dienen, und gibt über Ausgangsleitungen As Signale an Stellglieder aus, mit welchen der Prozess beeinflusst wird. Der Prozess sowie die Messumformer, Messwertgeber und Stellglieder sind in der Figur der Übersichtlichkeit wegen nicht dargestellt. Die beiden Teilsysteme Ta, Tb arbeiten zyklisch und synchron dasselbe Steuerprogramm ab. Zu ihrer Synchronisation ist eine Synchronisationsverbindung Sv vorgesehen, wobei die Redundanz- und Überwachungsfunktionen über diese Synchronisationsverbindung Sv verwirklicht werden.

Um in einem redundanten, zwei Teilsysteme aufweisenden Automatisierungssystem während der Prozesssteuerung (während des Steuerbetriebs) Diagnose- und/oder Testdaten für Diagnose- und/oder Testmaßnahmen bereitstellen zu können, ist vorgesehen, dass beide Teilsysteme die Steuerprogramme bzw. die Programmpfade zeitlich asynchron durchlaufen.

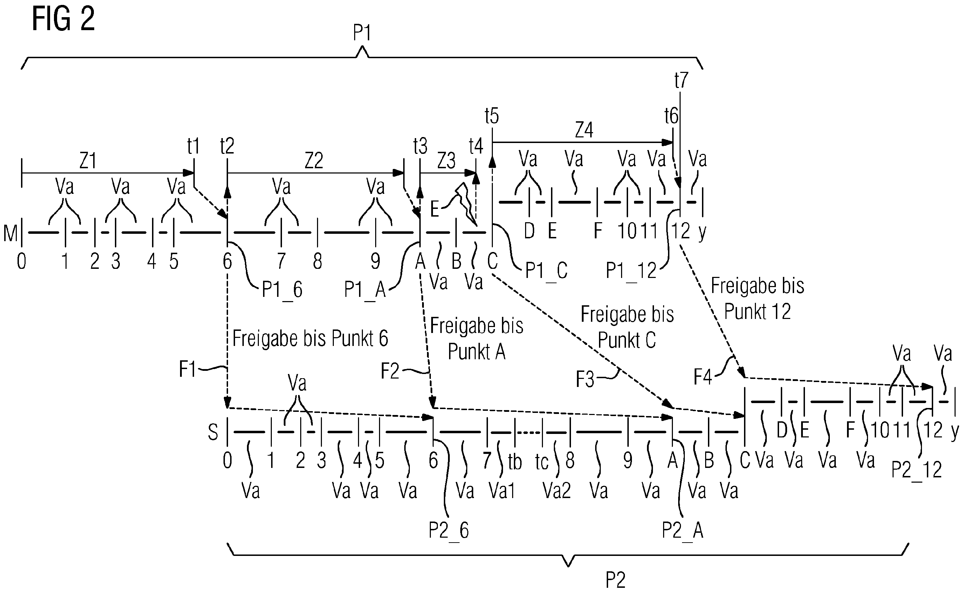

Zur näheren Erläuterung wird dazu im Folgenden auf die Figuren 1 und 2 verwiesen, in welchen Abläufe einer zeitlich asynchronen Kopplung von zwei Teilsystemen dargestellt werden. Die zwei Teilsysteme bewerkstelligen eine "ereignissynchrone Verarbeitung", was bedeutet, dass beide Teilsysteme aufgrund eines Ereignisses gleiche Programmpfade des jeweiligen Steuerprogramms durchlaufen, wobei die Durchläufe zeitlich asynchron erfolgen.

Es wird angenommen, dass ein Teilsystem als Master M und ein Teilsystem als Slave S bzw. als Reserve betrieben wird. Der Master M ist daher im Hinblick auf die Steuerung eines technischen Prozesses führend und übernimmt die Prozesssteuerung, wobei der Master die Prozesseingangsinformationen bzw. Prozesseingangswerte von der Peripherieeinheit Pe (Figur 3) liest und zeitlich asynchron dem Slave S bereitstellt. Der Slave S übernimmt nur dann die Masterfunktion bzw. die Masterschaft, falls der Master M aufgrund einer Störung ausfällt.

Der Master M verarbeitet ein Programm P1 zur Steuerung des technischen Prozesses, wobei auch der Slave S ein zu diesem Steuerprogramm P1 entsprechendes Programm P2 verarbeitet. Beide Steuerprogramme P1, P2 weisen eine Vielzahl von Verarbeitungsabschnitten (Va) unterschiedlicher Zeitdauer auf, wobei die Steuerprogramme P1, P2 an dem jeweiligen Beginn und dem jeweiligen Ende jedes Verarbeitungsabschnittes Va unterbrechbar sind. Beginn und Ende eines jeden Verarbeitungsabschnittes Va, welcher gewöhnlich eine Vielzahl von Programmcodes umfasst, repräsentieren somit unterbrechbare Programm- bzw. Unterbrechungsstellen 0, 1, 2, ... y. An diesen Stellen 0, 1, 2, ... y kann bei Bedarf das jeweilige Steuerprogramm P1, P2 mittels des Masters M und des Slaves S unterbrochen werden, um nach dem Auftreten eines Ereignisses bzw. eines Prozessalarms geeignete Reaktionen einleiten zu können. Ferner kann an diesen Unterbrechungsstellen 0, 1, 2, ... y das jeweilige Steuerprogramm P1, P2 unterbrochen werden, damit der Master M und der Slave S Freigaben, Quittungen oder sonstige Informationen über den Feldbus Fb oder über die Synchronisationsverbindung Sv (Figur 3) austauschen können. Nach Ablauf eines jeweiligen vorgebbaren bzw. vorgegebenen Zeitintervalls Zi, i= 1, 2, ... und zum jeweiligen Zeitpunkt des Auftretens einer nach Ablauf des jeweiligen Zeitintervalls Zi folgenden Unterbrechungsstelle - vorzugsweise der ersten auf das jeweilige Zeitintervall Zi folgenden Unterbrechungsstelle -, übermittelt der Master M dem Slave S eine Freigabe bzw. ein Freigabesignal, welches dem Slave S anzeigt, bis zu welchem Verarbeitungsabschnitt Va der Slave S das Steuerprogramm P2 verarbeiten darf. Diese Verarbeitungsabschnitte Va des Steuerprogramms P2 entsprechen im Hinblick auf die Prozesssteuerung denen, die der Master M bereits während der Verarbeitung des Steuerprogramms P1 verarbeitet hat. Im vorliegenden Ausführungsbeispiel wird angenommen, dass nach Ablauf eines Zeitintervalls Z1 zu einem Zeitpunkt t1 und zu einem Zeitpunkt t2, zu welchem eine erste Unterbrechungsstelle P1_6 (Unterbrechungsstelle 6) auf das Zeitintervall Z1 folgt, der Master M dem Slave S eine Freigabe F1 übermittelt. Diese Freigabe F1 umfasst die Information für den Slave S, dass dieser sein zu verarbeitendes Steuerprogramm P2 bis zu einer Unterbrechungsstelle P2_6 (Unterbrechungsstelle 6) verarbeiten darf, wobei die Unterbrechungsstelle P2_6 des Steuerprogramms P2 der Unterbrechungsstelle P1_6 des Steuerprogramms P1 entspricht. Dies bedeutet, dass aufgrund der Freigabe der Slave S die Verarbeitungsabschnitte Va des Steuerprogramms P2 verarbeiten kann, welche den Verarbeitungsabschnitten Va des Steuerprogramms P1 bis zum Zeitpunkt der Erzeugung der Freigabe bzw. des Freigabesignals entsprechen, wobei im Beispiel der Einfachheit halber angenommen wird, dass der Zeitpunkt der Erzeugung der Freigabe dem Zeitpunkt der Übermittlung der Freigabe zum Slave S entspricht. Die Verarbeitung dieser Verarbeitungsschritte Va mittels des Slaves S erfolgt also zeitlich asynchron zur Verarbeitung der entsprechenden Verarbeitungsabschnitte Va mittels des Masters M, wobei nach der Verarbeitung der Verarbeitungsabschnitte Va des Steuerprogramms P2 durch den Slave S eine Bearbeitung von weiteren Verarbeitungsabschnitten Va durch den Slave S nur dann erfolgt, wenn der Master M dem Slave S eine weitere Freigabe übermittelt.
Der Zeitpunkt des Auftretens dieser Unterbrechungsstelle P1_6, P2_6 (Unterbrechungsstelle 6) repräsentiert den Beginn eines auf das Zeitintervall Z1 folgenden Zeitintervalls Z2.

In der beschriebenen Art und Weise erfolgt die weitere zeitlich asynchrone Verarbeitung der Steuerprogramme P1, P2. Zu einem Zeitpunkt t3 des Auftretens einer ersten Unterbrechungsstelle P1_A nach Ablauf des Zeitintervalls Z2 übermittelt der Master M dem Slave S eine weitere Freigabe F2, die dem Slave S anzeigt, dass dieser weitere Verarbeitungsabschnitte Va bis zu der Unterbrechungsstelle P2_A bearbeiten kann. Diese Verarbeitungsabschnitte Va entsprechen wiederum denen, welche der Master M bereits vom Zeitpunkt t2 bis zum Zeitpunkt t3, also bis zur Unterbrechungsstelle P1_A, verarbeitet hat. Dies bedeutet, dass der Slave S die Verarbeitungsabschnitte Va von dem Zeitpunkt t2 der vorigen Freigabe F1 bis zum Zeitpunkt t3 der aktuellen Freigabe F2 verarbeitet. Der Zeitpunkt t3, zu welchem die erste Unterbrechungsstelle P1_A nach Ablauf des Zeitintervalls Z2 aufgetreten ist, ist der Beginn eines auf das Zeitintervall Z2 folgenden Zeitintervalls Z3.

Es kann nun vorkommen, dass während eines Zeitintervalls ein Ereignis, z. B. ein Ereignis in Form eines Prozessalarms, auftritt. Im Ausführungsbeispiel ist mit E ein derartiges Ereignis bezeichnet, auf welches der Master M während des Zeitintervalls Z3 zu einem Zeitpunkt t4 geeignet nach Maßgabe des Steuerprogramms P1 reagieren muss. In diesem Fall übermittelt der Master M dem Slave S eine Freigabe F3 nicht zu einem Zeitpunkt des Auftretens einer nach dem Zeitintervall Z3 folgenden Unterbrechungsstelle nach dem Zeitintervall Z3, sondern zu einem Zeitpunkt t5 des Auftretens einer auf das Auftreten des Ereignisses E folgenden Unterbrechungsstelle P1_C (Unterbrechungsstelle C). Dies bedeutet, dass das Zeitintervall Z3 aufgrund des Ereignisses E verkürzt wird, wobei der Zeitpunkt t5 der Beginn eines folgenden Zeitintervalls Z4 ist. Aufgrund der dem Slave S übermittelten Freigabe F3 verarbeitet der Slave S die Verarbeitungsabschnitte Va des Steuerprogramms P2, welche den Verarbeitungsabschnitten Va des Steuerprogramms P1 entsprechen, welche der Master M zwischen den Zeitpunkten t3 und t5 bereits verarbeitet hat.

Aufgrund des Ereignisses E verarbeitet der Master M während des Zeitintervalls Z4 Verarbeitungsabschnitte Va höherer Priorität, z. B. vollzieht der Master M einen Threadwechsel zum Zeitpunkt t5, und übermittelt wiederum nach Ablauf des Zeitintervalls Z4 zum Zeitpunkt t6 eine Freigabe F4 zu einem Zeitpunkt t7, zu welchem eine erste auf das Zeitintervall Z4 folgende Unterbrechungsstelle P1_12 (Unterbrechungsstelle 12) auftritt. Aufgrund dieser Freigabe verarbeitet der Slave S ebenfalls Verarbeitungsabschnitte Va bis zu einer Unterbrechungsstelle P2_12 (Unterbrechungsstelle 12) des Steuerprogramms P2, wobei diese Verarbeitungsabschnitte Va den Verarbeitungsabschnitten Va des Steuerprogramms P1 zwischen den Zeitpunkten t5 und t7 entsprechen und wobei der Slave S ebenfalls einen Threadwechsel vollzieht.

Wie erläutert, versetzen die Freigaben des Masters M den Slave S in die Lage, das gleiche "Threadgebirge" wie der Master M zu durchlaufen, was bedeutet, dass der Slave S einen "Threadwechsel" an einer Stelle im Steuerprogramm P2 vornimmt, die der Stelle des Threadwechsels im Master-Steuerprogramm P1 entspricht. Der Slave S setzt seine Bearbeitung nur dann fort, wenn dieser dazu vom Master M durch eine Freigabe aufgefordert wird. Im Hinblick auf die Verarbeitung der Verarbeitungsabschnitte verarbeitet der Master M diese in Echtzeit wie in einem Stand-Alone- bzw. wie in einem nicht-redundanten Betrieb und erteilt in regelmäßigen Zeitabständen sowie nach Auftreten von Ereignissen Freigaben zur Verarbeitung entsprechender Verarbeitungsabschnitte durch den Slave S, wobei der Master M weiter sein Steuerprogramm P1 verarbeitet und nicht aktiv auf eine Antwort des Slaves S wartet. Der Slave S läuft bezüglich der Verarbeitung der entsprechenden Verarbeitungsabschnitte dem Master M nach und verarbeitet diese aufgrund der erteilten Master-Freigaben.

Um während der Steuerung des technischen Prozesses (während des Steuerbetriebs) Diagnose- und/oder Testdaten einem mit dem Automatisierungssystem verbundenen Engineering-System bereitstellen zu können, weist das Slave-Steuerprogramm P2 Diagnose- und/oder Testanweisungen auf, wobei unter dem Begriff "Anweisung" auch ein "Befehl" verstanden wird. Im vorliegenden Ausführungsbeispiel ist das Slave-Steuerprogramm P2 (Figur 2) innerhalb eines Verarbeitungsabschnittes Va zu einem Zeitpunkt tb mit einer Diagnose- und/oder Testanweisung - im Folgenden als Anweisung bezeichnet - versehen, wobei aufgrund dieser Anweisung im Slave-Steuerprogramm P2 der Slave S ab diesem Zeitpunkt tb bis zu einem Zeitpunkt tc die Diagnosedaten dem Engineering-System bereitstellt und diesem übermittelt, was in der Zeichnung mit einer gestrichelten Linie dargestellt ist. Der Zeitpunkt tb repräsentiert einen "Haltepunkt", ab dem der Slave S die Verarbeitung des Verarbeitungsabschnittes Va des Slave-Steuerprogramms P2 unterbricht, was bedeutet, dass der Slave S lediglich einen Teil Va1 des Verarbeitungsabschnittes Va verarbeitet. Nach der Übermittlung dieser Diagnosedaten setzt der Slave S ab dem Zeitpunkt tc die Verarbeitung des Verarbeitungsabschnittes Va des Slave-Steuerprogramms P2 fort und bearbeitet einen weiteren Teil Va2 des Verarbeitungsabschnittes Va. Aufgrund dessen, dass der Slave S ab dem Zeitpunkt tb bis zum Zeitpunkt tc die Diagnosedaten übermittelt hat, vergrößert sich der Nachlauf. Der zeitliche Abstand zwischen der voranschreitenden Master-Steuerprogrammverarbeitung und der im Hinblick auf die Prozesssteuerung im "Stillstand" verharrenden Slave-Steuerprogrammverarbeitung vergrößert sich. Um diesen Nachlauf zu verringern, verarbeitet der Slave S die Verarbeitungsabschnitte Va des Slave-Steuerprogramms P2 relativ zur Verarbeitung der Verarbeitungsabschnitte Va des Master-Steuerprogramms P1 zumindest ab dem Zeitpunkt tc bis zum Zeitpunkt des Empfangs des folgenden Freigabesignals F3 schneller. Ist die "Aufholjagd" soweit fortgeschritten, dass der zeitliche Abstand bzw. der Nachlauf einen vorgegebenen bzw. vorgebbaren Wert erreicht hat, ist die "volle" Redundanz- bzw. Umschaltqualität wieder erreicht.

## Patentansprüche

1. Verfahren zum Betreiben eines mit einem ersten und einem zweiten Teilsystem versehenen Automatisierungssystems, welche zur Steuerung eines technischen Prozesses jeweils ein Steuerprogramm (P1, P2) verarbeiten, wobei eines dieser Teilsysteme als Master (M) und das andere Teilsystem als Slave (S) arbeitet, **dadurch gekennzeichnet, dass**
- das Slave-Steuerprogramm (P2) mit mindestens einer Diagnose- und/oder Testanweisung versehen wird,
- mittels des Masters (M) Freigaben (F1, F2, F3, F4) dem Slave (S) übermittelt werden, wobei nach der Übermittlung der Freigaben (F1, F2, F3, F4) der Master (M) sein Master-Steuerprogramm (P1) weiter verarbeitet und die Freigaben (F1, F2, F3, F4) dem Slave (S) anzeigen, welche Verarbeitungsabschnitte (Va) des Slave-Steuerprogramms (P2) der Slave (S) verarbeiten darf, wobei diese Verarbeitungsabschnitte (Va) den bereits verarbeiteten Verarbeitungsabschnitten (Va) des Master-Steuerprogramms (P1) entsprechen,
- mittels des Slaves (S) aufgrund der Freigaben (F1, F2, F3, F4) freigegebene Verarbeitungsabschnitte (Va) des Slave-Steuerprogramms (P2) mit einem zeitlichen Nachlauf verarbeitet werden, wobei
- mittels des Slaves (S) Diagnosedaten einem Engineering-System übermittelt werden, falls im Slave-Steuerprogramm (P2) die mindestens eine Diagnose- oder Testanweisung verarbeitet wird und
- zur Verringerung des zeitlichen Nachlaufs der Verarbeitung auf einen vorgegebenen Wert die Verarbeitungsabschnitte (Va) des Slave-Steuerprogramms (P2) relativ zur Verarbeitung der Verarbeitungsabschnitte (Va) des Master-Steuerprogramms (P1) schneller verarbeitet werden.

2. Verfahren nach Anspruch 1, **dadurch gekennzeichnet, dass** das Automatisierungssystem als redundantes Automatisierungssystem mit einer Master-CPU und einer Slave-CPU verwirklicht wird, wobei für den Fall, dass der Master (M) ausfällt, von dem Slave (S) die Funktion des Masters (M) übernommen wird.

3. Verfahren nach Anspruch 1, **dadurch gekennzeichnet, dass** der Master (M) in einer Core und der Slave (S) in einer weiteren Core einer Multicore-CPU verwirklicht werden.

4. Mit einem ersten und einem zweiten Teilsystem versehenes Automatisierungssystem, welche zur Steuerung eines technischen Prozesses jeweils ein Steuerprogramm (P1, P2) verarbeiten, wobei eines dieser Teilsysteme als Master (M) und das andere Teilsystem als Slave (S) arbeitet, **dadurch gekennzeichnet, dass**
- das Slave-Steuerprogramm (P2) mit mindestens einer Diagnose- und/oder Testanweisung versehen ist,
- der Master (M) dazu ausgebildet ist, Freigaben (F1, F2, F3, F4) dem Slave (S) zu übermitteln, wobei nach der Übermittlung der Freigaben (F1, F2, F3, F4) der Master (M) sein Master-Steuerprogramm (P1) weiter verarbeitet und die Freigaben (F1, F2, F3, F4) dem Slave (S) anzeigen, welche Verarbeitungsabschnitte (Va) des Slave-Steuerprogramms (P2) der Slave (S) verarbeiten darf, wobei diese Verarbeitungsabschnitte (Va) den bereits verarbeiteten Verarbeitungsabschnitten (Va) des Master-Steuerprogramms (P1) entsprechen,
- der Slave (S) dazu ausgebildet ist, aufgrund der Freigaben (F1, F2, F3, F4) freigegebene Verarbeitungsabschnitte (Va) des Slave-Steuerprogramms (P2) mit einem zeitlichen Nachlauf zu verarbeiten, wobei der Slave (S) ferner dazu ausgebildet ist,
- Diagnosedaten einem Engineering-System zu übermitteln, falls im Slave-Steuerprogramm (P2) die mindestens eine Diagnose- oder Testanweisung verarbeitet wird und
- zur Verringerung des zeitlichen Nachlaufs der Verarbeitung auf einen vorgegebenen Wert die Verarbeitungsabschnitte (Va) des Slave-Steuerprogramms (P2) relativ zur Verarbeitung der Verarbeitungsabschnitte (Va) des Master-Steuerprogramms (P1) schneller zu verarbeiten.

5. Automatisierungssystem nach Anspruch 4, **dadurch gekennzeichnet, dass** das Automatisierungssystem ein redundantes Automatisierungssystem mit einer Master- und einer Slave-CPU ist, wobei für den Fall, dass der Master (M) ausfällt, der Slave (S) die Funktion des Masters übernimmt.

6. Automatisierungssystem nach Anspruch 4, **dadurch gekennzeichnet, dass** der Master (M) und der Slave (S) Bestandteile einer Multicore-CPU sind, wobei ein erster Core der Multicore-CPU als Master (M) und einer zweiten Core der Multicore-CPU als Slave (S) ausgebildet ist.

7. Slave für ein mit einem ersten und einem zweiten Teilsystem versehenes Automatisierungssystem nach einem der Ansprüche 4 bis 6, welche zur Steuerung eines technischen Prozesses jeweils ein Steuerprogramm (P1, P2) verarbeiten, wobei eines dieser Teilsysteme als Master (M) und das andere Teilsystem als Slave (S) arbeitet, **dadurch gekennzeichnet, dass**
- das Slave-Steuerprogramm (P2) mit mindestens einer Diagnose- und/oder Testanweisung versehen ist,
- der Slave (S) dazu ausgebildet ist, aufgrund von dem Slave (S) übermittelten Master-Freigaben (F1, F2, F3, F4), welche dem Slave (S) anzeigen, welche Verarbeitungsabschnitte (Va) des Slave-Steuerprogramms (P2) der Slave (S) verarbeiten darf, freigegebene Verarbeitungsabschnitte (Va) des Slave-Steuerprogramms (P2) mit einem zeitlichen Nachlauf zu verarbeiten, wobei der Slave (S) ferner dazu ausgebildet ist,
- Diagnosedaten einem Engineering-System zu übermitteln, falls im Slave-Steuerprogramm (P2) die mindestens eine Diagnose- oder Testanweisung verarbeitet wird und
- zur Verringerung des zeitlichen Nachlaufs der Verarbeitung auf einen vorgegebenen Wert die Verarbeitungsabschnitte (Va) des Slave-Steuerprogramms (P2) relativ zur Verarbeitung der Verarbeitungsabschnitte (Va) des Master-Steuerprogramms (P1) schneller zu verarbeiten.

## Claims

1. Method for operating an automation system provided with a first subsystem and a second subsystem which each process a control program (P1, P2) in order to control a technical process, one of these subsystems operating as a master (M) and the other subsystem operating as a slave (S), **characterized in that**
- the slave control program (P2) is provided with at least one diagnostic and/or test instruction,
- the master (M) is used to transmit releases (F1, F2, F3, F4) to the slave (S), the master (M) further processing its master control program (P1) after transmitting the releases (F1, F2, F3, F4) and the releases (F1, F2, F3, F4) indicating to the slave (S) which processing sections (Va) of the slave control program (P2) can be processed by the slave (S), these processing sections (Va) corresponding to the processing sections (Va) of the master control program (P1) which have already been processed,
- the slave (S) is used to process processing sections (Va) of the slave control program (P2), which have been released on the basis of the releases (F1, F2, F3, F4), with temporal trailing,
- the slave (S) being used to transmit diagnostic data to an engineering system if the at least one diagnostic or test instruction is processed in the slave control program (P2), and
- the processing sections (Va) of the slave control program (P2) being processed more quickly relative to the processing of the processing sections (Va) of the master control program (P1) in order to reduce the temporal trailing of the processing to a predefined value.

2. Method according to Claim 1, **characterized in that** the automation system is implemented in the form of a redundant automation system having a master CPU and a slave CPU, the slave (S) assuming the function of the master (M) if the master (M) fails.

3. Method according to Claim 1, **characterized in that** the master (M) is implemented in one core and the slave (S) is implemented in a further core of a multicore CPU.

4. Automation system provided with a first subsystem and a second subsystem which each process a control program (P1, P2) in order to control a technical process, one of these subsystems operating as a master (M) and the other subsystem operating as a slave (S), **characterized in that**
- the slave control program (P2) is provided with at least one diagnostic and/or test instruction,
- the master (M) is designed to transmit releases (F1, F2, F3, F4) to the slave (S), the master (M) further processing its master control program (P1) after transmitting the releases (F1, F2, F3, F4) and the releases (F1, F2, F3, F4) indicating to the slave (S) which processing sections (Va) of the slave control program (P2) can be processed by the slave (S), these processing sections (Va) corresponding to the processing sections (Va) of the master control program (P1) which have already been processed,
- the slave (S) is designed to process processing sections (Va) of the slave control program (P2), which have been released on the basis of the releases (F1, F2, F3, F4), with temporal trailing, the slave (S) also being designed
- to transmit diagnostic data to an engineering system if the at least one diagnostic or test instruction is processed in the slave control program (P2), and
- to process the processing sections (Va) of the slave control program (P2) more quickly relative to the processing of the processing sections (Va) of the master control program (P1) in order to reduce the temporal trailing of the processing to a predefined value.

5. Automation system according to Claim 4, **characterized in that** the automation system is a redundant automation system having a master CPU and a slave CPU, the slave (S) assuming the function of the master if the master (M) fails.

6. Automation system according to Claim 4, **characterized in that** the master (M) and the slave (S) are parts of a multicore CPU, a first core of the multicore CPU being in the form of a master (M) and a second core of the multicore CPU being in the form of a slave (S).

7. Slave for an automation system according to one of Claims 4 to 6 which is provided with a first subsystem and a second subsystem which each process a control program (P1, P2) in order to control a technical process, one of these subsystems operating as a master (M) and the other subsystem operating as a slave (S), **characterized in that**
- the slave control program (P2) is provided with at least one diagnostic and/or test instruction,
- the slave (S) is designed to process processing sections (Va) of the slave control program (P2), which have been released on the basis of master releases (F1, F2, F3, F4) which have been transmitted to the slave (S) and indicate to the slave (S) which processing sections (Va) of the slave control program (P2) can be processed by the slave (S), with temporal trailing, the slave (S) also being designed
- to transmit diagnostic data to an engineering system if the at least one diagnostic or test instruction is processed in the slave control program (P2), and
- to process the processing sections (Va) of the slave control program (P2) more quickly relative to the processing of the processing sections (Va) of the master control program (P1) in order to reduce the temporal trailing of the processing to a predefined value.

## Revendications

1. Procédé pour faire fonctionner un système d'automatisation, qui est pourvu d'un premier et d'un deuxième sous-systèmes, lesquels, pour commander un processus technique, traitent chacun un programme (P1, P2) de commande, l'un de ces sous-systèmes fonctionnant comme maître (M) et l'autre sous-système comme esclave (S), **caractérisé en ce que**
- on dote le programme (P2) de commande esclave d'au moins une instruction de diagnostic et/ou de test,
- au moyen du maître (M), on transmet des libérations (F1, F2, F3, F4) à l'esclave (S), dans lequel, après la transmission des libérations (F1, F2, F3, F4), le maître (M) retraite son programme (P1) de commande maître et les libérations (F1, F2, F3, F4) indiquent à l'esclave (S) les parties (Va) de traitement du programme (P2) de commande esclave que l'esclave (S) peut traiter, ces parties (Va) de traitement correspondant aux parties (Va) de traitement déjà traitées du programme (P1) de commande maître,
- au moyen de l'esclave (S), sur la base des libérations (F1, F2, F3, F4), on traite des parties (Va) de traitement libérées du programme (P2) de commande esclave avec un décalage dans le temps, dans lequel
- au moyen de l'esclave (S), on transmet des données de diagnostic à un système d'ingénierie si, dans le programme (P2) de commande esclave, on traite la au moins une instruction de diagnostic ou de test et
- pour diminuer le décalage dans le temps du traitement à une valeur donnée à l'avance, on traite les parties (Va) de traitement du programme (P2) de commande esclave plus rapidement que le traitement des parties (Va) de traitement du programme (P1) de commande maître.

2. Procédé suivant la revendication 1, **caractérisé en ce que** l'on réalise le système d'automatisation sous la forme d'un système d'automatisation redondant par un CPU maître et un CPU esclave, dans lequel, dans le cas où le maître (M) tombe en panne, la fonction du maître (M) est prise en charge par l'esclave (S).

3. Procédé suivant la revendication 1, **caractérisé en ce que** l'on réalise le maître (M) dans un noyau et l'esclave (S) dans un autre noyau d'un CPU multi-noyaux.

4. Système d'automatisation pourvu d'un premier et d'un deuxième sous-systèmes, qui, pour commander un processus technique, traitent chacun un programme (P1, P2) de commande, l'un de ces sous-systèmes fonctionnant comme maître (M) et l'autre sous-système comme esclave (S), **caractérisé en ce que**
- le programme (P2) de commande esclave est doté d'au moins une instruction de diagnostic et/ou de test,
- le maître (M) est constitué pour transmettre des libérations (F1, F2, F3, F4) à l'esclave (S), dans lequel, après la transmission des libérations (F1, F2, F3, F4), le maître (M) retraite son programme (P1) de commande maître et les libérations (F1, F2, F3, F4) indiquent à l'esclave (S) les parties (Va) de traitement du programme (P2) de commande esclave que l'esclave (S) peut traiter, ces parties (Va) de traitement correspondant aux parties (Va) de traitement déjà traitées du programme (P1) de commande maître,
- l'esclave (S) est constitué pour, sur la base des libérations (F1, F2, F3, F4), traiter des parties (Va) de traitement libérées du programme (P2) de commande esclave avec un décalage dans le temps, l'esclave (S) étant en outre constitué pour
- transmettre des données de diagnostic à un système d'ingénierie si, dans le programme (P2) de commande esclave, la au moins une instruction de diagnostic ou de test est traitée et
- pour diminuer le décalage dans le temps du traitement à une valeur donnée à l'avance, on traite les parties (Va) de traitement du programme (P2) de commande esclave plus rapidement que le traitement des parties (Va) de traitement du programme (P1) de commande maître.

5. Système d'automatisation suivant la revendication 4, **caractérisé en ce que** l'on réalise le système d'automatisation sous la forme d'un système d'automatisation redondant par un CPU maître et un CPU esclave, dans lequel, dans le cas où le maître (M) tombe en panne, la fonction du maître (M) est prise en charge par l'esclave (S).

6. Système d'automatisation suivant la revendication 4, **caractérisé en ce que** le maître (M) et l'esclave (S) font partie d'un CPU multi-noyaux, un premier noyau du CPU multi-noyaux étant constitué en maître (M) et un deuxième noyau du CPU multi-noyaux en esclave (S).

7. Esclave pour un système d'automatisation doté d'un premier et d'un deuxième sous-systèmes suivant l'une des revendications 4 à 6, qui, pour commander un processus technique, traitent chacun un programme (P1, P2) de commande, l'un de ces sous-systèmes fonctionnant en maître (M) et l'autre sous-système en esclave (S), **caractérisé en ce que**
- le programme (P2) de commande esclave est doté d'au moins une instruction de diagnostic et/ou de test,
- l'esclave (S) est constitué pour, sur la base des libérations (F1, F2, F3, F4) de maître transmises par l'esclave (S), qui indiquent à l'esclave (S) les parties (Va) de traitement du programme (P2) de commande esclave que l'esclave (S) peut traiter, traiter des parties (Va) de traitement libérées du programme (P2) de commande esclave avec un décalage dans le temps, l'esclave (S) étant constitué en outre pour
- transmettre des données de diagnostic à un système d'ingénierie si, dans le programme (P2) de commande esclave, la au moins une instruction de diagnostic ou de test est traitée et
- pour diminuer le décalage dans le temps du traitement à une valeur donnée à l'avance, on traite les parties (Va) de traitement du programme (P2) de commande esclave plus rapidement que le traitement des parties (Va) de traitement du programme (P1) de commande maître.
